# FASCICULE DE BREVET EUROPEEN

(11) **EP 2 231 826 B1**
(45) Date de publication et mention de la délivrance du brevet: **15.02.2017**
(21) Numéro de dépôt: 08863928.1
(22) Date de dépôt: 23.12.2008
(51) Int. Cl.: C10J 3/00

(54) **PROCEDE ET CHAINE DE TRAITEMENT POUR LA CONVERSION THERMOCHIMIQUE PAR GAZEIFICATION D'UNE CHARGE HUMIDE DE MATERIAU BIOLOGIQUE**
BEHANDLUNGSKETTE UND VERFAHREN ZUR THERMOCHEMISCHEN UMWANDLUNG EINES FEUCHTEN STROMS AN BIOLOGISCHEM MATERIAL DURCH VERGASUNG
TREATMENT CHAIN AND PROCESS FOR THE THERMOCHEMICAL CONVERSION OF A WET FEED OF BIOLOGICAL MATERIAL BY GASIFICATION

(30) Priorité: 26.12.2007 FR 0709097
(43) Date de publication de la demande: 29.09.2010
(73) Titulaire: Total Raffinage France, 92400 Courbevoie (FR)
(72) Inventeur: CRESPIN, Pierre, F-76620 Le Havre (FR)
(74) Mandataire: Largeau, Béatrice
(86) Numéro de dépôt international: PCT/FR2008/052410
(87) Numéro de publication internationale: WO 2009/081082

(56) Documents cités:
- EP-A- 1 477 461
- WO-A-2004/009901
- WO-A-2004/046279
- WO-A-2007/037768
- JP-A- 2007 031 492
- US-A- 4 069 024
- US-A- 5 171 406
- US-A- 6 148 599
- US-A1- 2003 236 311
- HAMELINCK C N ET AL: "Future prospects for production of methanol and hydrogen from biomass" JOURNAL OF POWER SOURCES, ELSEVIER SA, CH, vol. 111, no. 1, 18 septembre 2002 (2002-09-18), pages 1-22, XP004380118 ISSN: 0378-7753

## Description

La présente invention concerne un procédé et une chaîne de traitement par gazéification d'une charge humide de matériau biologique telle que de la biomasse ou du charbon, c'est-à-dire contenant une quantité significative d'eau telle qu'au moins supérieure à 10% poids.

La conversion thermochimique de la biomasse par gazéification est une technique connue et utilisée depuis longtemps. Cette technologie a fait l'objet de nombreuses recherches fondamentales et de réalisations pilotes et préindustrielles. A l'origine, les applications visées étaient principalement la production de chaleur et la co-génération, c'est-à-dire la production conjointe de chaleur et d'électricité.

Par exemple, le brevet FR 2899596 décrit un procédé de production d'énergie électrique à partir de biomasse comprenant les étapes successives suivantes :
a) gazéification de la biomasse en présence d'air dans un réacteur, avantageusement à une température supérieure à 800 degrés Celsius, pour obtenir un gaz de synthèse,
b) refroidissement du gaz de synthèse à une température non inférieure à 300 degrés Celsius,
c) lavage du gaz de synthèse afin d'éliminer substantiellement les goudrons et/ou l'ammoniac,
d) injection du gaz lavé dans au moins un moteur à gaz couplé à un générateur électrique, permettant de produire de l'énergie électrique.

Une application a été particulièrement développée depuis quelques années avec les filières dites de conversion BtL (pour « Biomass to Liquid », c'est-à-dire : « biomasse vers carburant liquide ») par essentiellement deux étapes : la gazéification de la biomasse et la synthèse bien connue de l'homme de l'art, dite « Fischer-Tropsch » permettant de transformer le gaz ainsi obtenu en carburant liquide. Pour une description plus détaillée de cette technologie, on peut se référer par exemple à la revue « Studies in Surface Science and Catalysis », Vol. 152, Steynberg and Dry (ed.) Elsevier, 2004, Amsterdam, 0-444-51354-X.

Une chaîne de procédé de conversion thermochimique pour fabriquer un gaz de synthèse, par exemple une chaîne de conversion de type BtL comprend typiquement, à partir d'une charge biomasse, l'enchaînement suivant de dispositifs bien connus de l'homme de l'art :
- un dispositif de séchage de la charge, ou dans certains cas un dispositif de torréfaction ou analogue ;
- un dispositif de gazéification de la charge séchée ou torréfiée ;
- un reformeur de goudrons, de type thermique ou catalytique ;
- un échangeur de chaleur qu'on utilise souvent pour produire de la vapeur ;
- un dispositif de dépoussiérage ;
- un dispositif de lavage du gaz ;
- un réacteur de conversion du CO à la vapeur (ou « water gas shift » en anglais, expression la plus souvent utilisée) qui permet de réduire la teneur en CO du gaz traité et d'augmenter sa teneur en hydrogène (en réalisant la réaction CO + H₂O = CO₂ + H₂) jusqu'à obtenir un rapport H₂/CO dans ledit gaz voisin de 2 qui est adapté à une transformation ultérieure de ce gaz de synthèse en hydrocarbures liquides par synthèse chimique selon divers procédés connus (par exemple le « Fischer-Tropsch » pour lequel un tel rapport est nécessaire) ;
- un dispositif de traitement du gaz pour assurer notamment sa désulfuration et sa décarbonatation, pour finalement obtenir un gaz de synthèse pouvant être utilisé pour produire comme déjà mentionné plus haut des carburants liquides, mais aussi de l'hydrogène de synthèse, certains produits chimiques, ou encore des gaz naturels de synthèse à brûler dans des turbines à gaz ou à combustion.

Dans la chaîne décrite précédemment, certains éléments comme les dispositifs de séchage et de reformage sont facultatifs selon les types de charge biomasse à traiter.

Dans d'autres cas particuliers, certains équipements peuvent être ajoutés comme par exemple un dépoussiéreur à chaud en amont de l'échangeur de chaleur.

L'une des difficultés majeures que l'on rencontre usuellement dans ce type de chaîne de conversion de biomasse, est qu'on peut avoir à traiter une charge humide, comprenant de 10 à 40% de poids d'eau par rapport au poids de matière sèche, voire très humide, comprenant plus de 40% en poids d'eau par rapport au poids de matière sèche.

L'inconvénient majeur de cette humidité de la charge réside dans la dégradation des rendements thermique et matière (en gaz de synthèse produit) de la chaîne de gazéification.

En effet, la Demanderesse a démontré empiriquement qu'une augmentation de 1% en poids d'eau par rapport au poids de matière sèche de la charge se traduit par une baisse de la température de gazéification d'environ 14 °C. Ainsi, à température fixée de gazéification pour le procédé, chaque pourcent d'eau en plus dans la charge doit être compensé par une consommation supplémentaire en oxygène de 0,2% poids de charge biomasse, ce qui engendre finalement une perte équivalente en potentiel de gaz de synthèse à produire.

A titre indicatif, les potentiels énergétiques libérables par oxydation complète du gaz de synthèse à la sortie du dispositif de gazéification ou du gaz de synthèse avant l'étape de conversion Fischer-Tropsch représentent encore environ 85% de l'énergie potentielle initiale d'une charge biomasse contenant environ 20% en poids d'eau par rapport au poids de matière sèche.

C'est pourquoi, au-delà d'un certain taux d'humidité de la charge, il devient économiquement utile, voire nécessaire d'envisager un séchage préalable de la charge.

De tels dispositifs de séchage de la charge à traiter dans des procédés similaires à ceux décrits plus haut ont déjà été décrits. Dans la plupart des cas, ils sont extérieurs à la chaîne de traitement de la charge ce qui pose des problèmes de fonctionnement à des niveaux de pression différenciés. Dans d'autres cas plus rares, ces dispositifs de séchage sont intégrés à la chaîne de traitement.

Par exemple, le brevet FR 2249162 décrit un procédé de gazéification de produits carbonés comprenant la combinaison d'une réaction de conversion et d'une réaction de méthanation pour obtenir du méthane et des hydrocarbures plus légers, dans lequel un séchage est réalisé par un chauffage indirect par de la vapeur qui est condensée. La vapeur de séchage ainsi produite est, après élévation de pression dans un éjecteur, injectée dans le dispositif de gazéification en tant qu'agent de gazéification. Le dispositif décrit est particulièrement complexe.

De manière plus pragmatique, le brevet GB 617652 décrit notamment un dispositif alimenté par du combustible humide pour produire un gaz destiné à faire fonctionner une turbine à gaz, dans lequel il est prévu une chambre de séchage du combustible humide en amont du dispositif de gazéification. On fait circuler dans cette chambre, en boucle fermée, un gaz chaud initialement produit par le gazéifieur et réchauffé de manière indirecte, au moyen d'un échangeur, par le gaz produit par la turbine. Ce brevet décrit une application simplifiée et spécifique d'alimentation d'une turbine à gaz où il n'est pas nécessaire de disposer d'un réacteur de conversion du CO à la vapeur. Le gaz de sortie de la turbine n'est pas directement utilisable pour réchauffer la chambre de séchage car il est trop chaud et trop riche en oxygène. Il faut donc utiliser un échangeur ce qui complique et augmente le coût du dispositif. Le GB 617652 ne prévoit pas non plus une quelconque récupération de l'eau dans le gaz de séchage après refroidissement de celui-ci. On comprend qu'à l'époque où ce brevet a été déposé, les préoccupations économiques et écologiques n'étaient pas celles d'aujourd'hui. Ces contraintes ont notamment poussé la Demanderesse à imaginer et développer un dispositif de séchage de la charge moins complexe, fonctionnant de manière plus économique, et adapté aux applications spécifiques envisagées par la Demanderesse.

Ainsi, dans une chaîne de traitement de biomasse humide du genre décrit plus haut, la Demanderesse se propose d'apporter une solution technique simple, intégrée et économique de séchage de la charge pour remédier aux inconvénients engendrés par la présence de cette humidité sur les rendements de la chaîne de traitement.

De plus, au moyen de la présente invention, la Demanderesse, se propose, simultanément, de pallier les problèmes de manque d'eau courants dans certaines régions industrielles, alors qu'il est nécessaire d'en disposer d'une quantité non négligeable pour alimenter en eau le réacteur de conversion du CO à la vapeur, ce dernier étant indispensable à l'ajustement du rapport H₂/CO dans le gaz de synthèse qui sera transformé ultérieurement en hydrocarbures liquides par synthèse chimique selon divers procédés connus (par exemple le procédé « Fischer-Tropsch »).

Ainsi la présente invention décrit un procédé de conversion thermochimique d'une charge humide selon la revendication 1.

Grâce à cette enceinte de séchage qui est intégrée directement dans la chaîne de traitement du matériau biologique en amont du dispositif de gazéification, la présente invention permet la mise en oeuvre d'une charge humide comprenant de 10 à 40% en poids d'eau par rapport au poids de matière sèche, voire très humide, comprenant plus de 40% en poids d'eau par rapport au poids de matière sèche, sans générer de perte de rendement liée à la présence d'eau dans la charge.

On obtient en plus, par rapport à un schéma classique ne prévoyant pas une telle intégration des moyens de séchage dans la chaîne de traitement, un rendement en gaz utile et produit final recherché (produit chimique, carburant de synthèse, ou gaz industriel) plus élevé.

La production utile est donc accrue pour une charge d'entrée donnée, la consommation d'air ou d'oxygène utilisé dans le dispositif de gazéification est plus faible car elle est compensée par l'apport en gaz chaud de séchage qui permet de réduire le taux d'humidité de la charge, et les émissions de CO₂ sont également réduites grâce au recyclage d'une partie du gaz produit en gaz chaud de séchage. En d'autres termes, les équipements nécessaires au recyclage d'une partie du gaz chaud produit vers l'enceinte de séchage ne sont pas excessivement nombreux ni très compliqués à réaliser, il en résulte une chaîne de traitement économiquement performante, ce qui peut rendre ainsi économiquement accessibles et utilisables des charges très humides dont l'économie du traitement n'aurait pas nécessairement pu être justifiée sans la présente invention.

Le procédé comprend en outre une étape de traitement de gaz, comprenant par exemple un lavage, réalisée en aval de l'étape de gazéification et en amont de l'étape de conversion du CO à la vapeur, et la partie de gaz chaud qui est recyclée vers l'enceinte de séchage, est prélevée en aval de ladite étape de traitement, et en amont de l'étape de conversion du CO à la vapeur.

Avantageusement, la partie de gaz chaud qui est recyclée vers l'enceinte de séchage, représente entre 10% et 60% en volume du gaz circulant dans la chaîne de traitement au point de prélèvement de ladite partie de gaz recyclée.

De préférence, la charge de matériau biologique à traiter par le dispositif selon l'invention a une teneur en eau supérieure ou égale à 10% en poids d'eau par rapport au poids de matière sèche. Cette teneur en eau peut atteindre 200%, et sera de préférence comprise entre 20 et 80% en poids d'eau par rapport au poids de matière sèche.

Avantageusement, en sortie de l'étape de prétraitement, le taux de déshydratation de la charge est compris entre 70 et 99% en poids, de préférence entre 90 et 95% en poids.

Afin de contrôler le taux de déshydratation de la charge entrant dans le dispositif de gazéification, on peut prévoir un dispositif de contrôle de la teneur en eau de la charge sortant de l'enceinte de séchage, permettant de régler les conditions de séchage de l'enceinte.

Toutefois, dans le cas où le gaz chaud de séchage chargé d'eau après son passage dans l'enceinte de séchage est recyclé dans la chaîne de traitement, on installera avantageusement un dispositif de mesure de la teneur en eau de ce gaz chaud. Une telle mesure, combinée à la mesure du débit de gaz chaud prélevé avant son entrée dans l'enceinte de séchage permet par exemple de déterminer le taux de déshydratation de la charge en sortie de l'enceinte de séchage, permettant de régler les conditions de chauffage dans cette enceinte.

Le gaz chaud de séchage introduit dans l'enceinte de séchage a une température comprise entre 200 et 400°C.

Selon un mode de réalisation particulier de l'invention, les moyens de relevage de pression du gaz chaud de séchage sont un compresseur.

Avantageusement, au cours de l'étape de prétraitement, la charge humide est introduite dans une enceinte de séchage du type à lit fluidisé qui comprend des moyens complémentaires de chauffage du gaz chaud de séchage qui sont, de préférence, disposés dans l'enceinte de séchage.

Selon un autre mode de réalisation particulier de l'invention, l'étape de gazéification est réalisée au moyen d'un dispositif de gazéification du type à lit fluidisé bouillonnant ou circulant, et comportant des moyens de recyclage des particules chaudes du cyclone vers l'enceinte de séchage, qui procurent ainsi un chauffage complémentaire du gaz chaud de séchage.

L'invention prévoit aussi alternativement que le dispositif de gazéification puisse être du type à combustion allothermique, c'est-à-dire qui utilise la chaleur d'une source extérieure (par opposition à autothermique).

On aurait pu prévoir que le gaz chaud de séchage, après avoir rempli sa fonction dans l'enceinte de séchage, soit recyclé pour une utilisation extérieure à la chaîne de traitement décrite par l'invention, ou tout simplement brûlé à la torche.

Le gaz de séchage, chargé d'eau suite à son passage dans l'enceinte de séchage, est recyclé dans la chaîne de traitement du gaz de synthèse en aval de l'étape de gazéification et en amont de l'étape de conversion du CO à la vapeur pour alimenter en eau, en tout ou partie, le réacteur de conversion du CO à la vapeur.

Ainsi on profite de la présence de ce gaz chargé d'eau pour prévoir un recyclage en aval qui permette de suralimenter ledit réacteur de conversion du CO à la vapeur dont on rappelle qu'il a besoin d'une alimentation en eau pour fonctionner correctement. Cela permet évidemment des économies d'eau appréciables dans des régions où on en manque et où la présente invention peut être mise en oeuvre.

Selon encore un mode de réalisation particulier de l'invention, le procédé selon l'invention, comprend en outre, dans la chaîne de traitement, en aval de l'étape de gazéification et en amont de l'étape de conversion du CO à la vapeur, une étape de traitement comprenant au moins une étape d'échange de chaleur et une étape de dépoussiérage et le gaz de séchage, chargé d'eau suite à son passage dans l'enceinte de séchage, est recyclé dans la chaîne de traitement en amont de l'étape de dépoussiérage ou de l'étape d'échange de chaleur.

L'invention concerne également une chaîne de traitement par gazéification pour la conversion thermochimique d'une charge humide selon la revendication 6.

La chaîne de traitement comprend en outre un dispositif de traitement du gaz situé en aval du dispositif de gazéification et en amont du réacteur de conversion du CO à la vapeur, les moyens de prélèvement sont situés en aval dudit dispositif de traitement et en amont de l'étape de conversion du CO à la vapeur.

La chaîne de traitement comprend des moyens de recyclage dudit gaz de séchage, chargé d'eau suite à son passage dans l'enceinte de séchage, dans la chaîne de traitement en aval du dispositif de gazéification et en amont du réacteur de conversion du CO à la vapeur, pour alimenter, en tout ou partie, ce réacteur en eau.

De préférence, lorsque la chaîne de traitement comprend en outre un dispositif de traitement du gaz, comprenant au moins un échangeur de chaleur et un dispositif de dépoussiérage, situé en aval du dispositif de gazéification et en amont du réacteur de conversion du CO à la vapeur, lesdits moyens de recyclage rejoignent alors la chaîne de traitement en amont du dispositif de dépoussiérage ou de l'échangeur de chaleur.

Avantageusement, les moyens de relevage de pression sont un compresseur.

Dans un mode de réalisation, l'enceinte de séchage est du type à lit fluidisé et comprend des moyens complémentaires de chauffage du gaz chaud de séchage, qui peuvent être disposés dans l'enceinte de séchage.

Dans une variante, le dispositif de gazéification est du type à lit fluidisé bouillonnant ou circulant et comporte des moyens de recyclage des particules chaudes du cyclone vers l'enceinte de séchage.

Dans une autre variante, le dispositif de gazéification est du type à combustion allothermique.

La chaîne de traitement selon l'invention est tout particulièrement adaptée à la mise en oeuvre du procédé selon l'invention.

L'invention concerne également la mise en oeuvre du procédé selon l'invention par la chaîne de traitement selon l'invention.

Finalement, comme déjà dit plus haut, le procédé ou le dispositif selon l'invention sera avantageusement utilisé pour la fabrication de :
- gaz de synthèse pour la fabrication de carburants liquides,
- gaz naturel synthétique, tel que du méthane,
- ammoniac synthétique et alcools synthétiques ou,
- hydrogène synthétique.

A cet effet, le rapport H₂/CO sera choisi de manière appropriée.

L'invention va maintenant être décrite ci-après plus en détails, en référence aux dessins schématiques annexés. Sur ces dessins :
- la figure 1 est un schéma synoptique d'une chaîne de traitement d'une charge humide selon l'invention ;
- la figure 2 est une vue schématique d'une enceinte de séchage telle que représentée sur la figure 1 ;
- la figure 3 est une vue schématique d'une enceinte de séchage et d'un dispositif de gazéification tel que représenté sur la figure 1 ;
- la figure 4 est une vue schématique d'un mode de réalisation alternatif d'une enceinte de séchage et d'un dispositif de gazéification tel que représenté sur la figure 1.

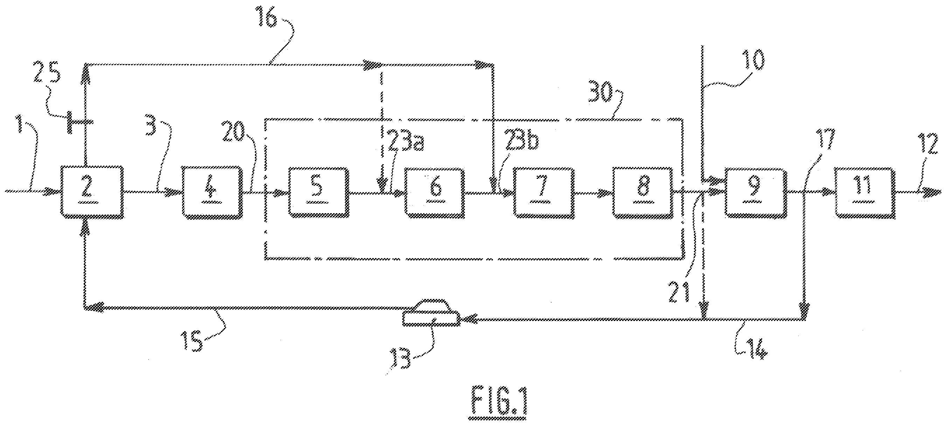

La figure 1 représente un mode de réalisation préféré d'une chaîne de traitement par gazéification pour la conversion thermochimique d'une charge humide ou très humide, d'un matériau biologique selon l'invention.

La chaîne de traitement représentée est par exemple une chaîne de traitement de type BtL (« Biomass to Liquid ») utilisée pour fabriquer un gaz de synthèse 12 à partir d'une charge de biomasse humide 1, telle que par exemple du bois ou de la paille.

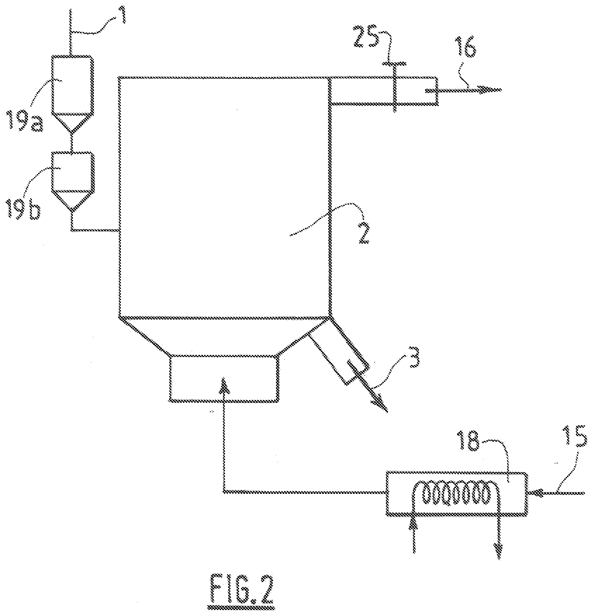

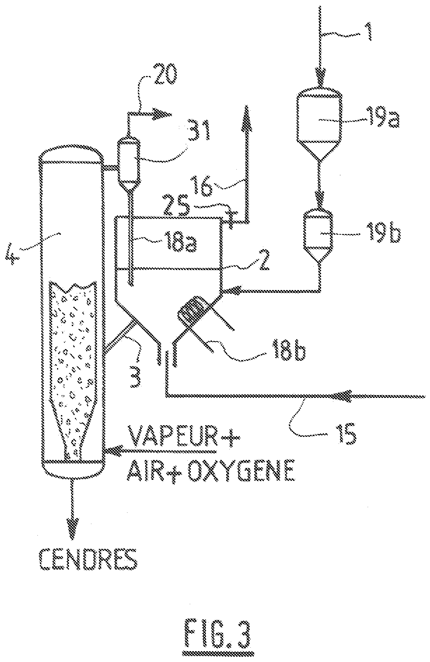

Cette chaîne de traitement comprend l'enchaînement en ligne suivant de dispositifs bien connus de l'homme de l'art :
- une enceinte de séchage 2 de la charge 1, par exemple un dispositif de torréfaction ou analogue, dont un exemple de réalisation est illustré schématiquement à la figure 2, fonctionnant à une température généralement comprise entre 100 et 300°C ;
- un dispositif de gazéification 4 de la charge séchée 3, dont des exemples de réalisation sont illustrés schématiquement aux figures 2 et 3, et qui produit un gaz 20 à une température généralement comprise entre 800 et 1300°C ;
- un dispositif de traitement 30 comprenant :
- un reformeur de goudrons 5 conçu pour éliminer les goudrons contenus dans le gaz produit 20, de type thermique ou catalytique ;
- un échangeur de chaleur 6, de conception classique en serpentin à circulation d'eau par exemple, qu'on utilise par exemple pour produire une partie de la vapeur nécessaire aux moyens d'alimentation en eau 10 ;
- un dispositif de dépoussiérage 7 du gaz 20 ;
- un dispositif de lavage 8 du gaz 20 ;
- un réacteur de conversion 9 du CO à la vapeur (ou « water gas shift » en anglais, expression la plus souvent utilisée) qui comprend une alimentation en eau, sous forme de liquide ou de vapeur d'eau, 10, qui permet de réduire la teneur en CO du gaz traité 20 et d'augmenter sa teneur en hydrogène (en réalisant la réaction CO + H₂O = CO₂ + H₂) jusqu'à obtenir un rapport H₂/CO dans ledit gaz qui est, par exemple, adapté à une transformation ultérieure de ce gaz de synthèse 12 en hydrocarbures liquides par synthèse chimique selon divers procédés connus, par exemple usuellement le procédé dit « Fischer-Tropsch » développé en particulier par la compagnie sud-africaine Sasol mais aujourd'hui dans le domaine public, et pour lequel un rapport H₂/CO d'environ 2 serait alors nécessaire ;
- un dispositif 11 de traitement final du gaz 20 pour assurer notamment sa désulfuration et sa décarbonatation, par exemple un dispositif de traitement dit aux amines dont différentes variantes sont aussi dans le domaine public, pour finalement obtenir un gaz de synthèse 12 pouvant être utilisé pour produire des carburants liquides, mais aussi de l'hydrogène de synthèse, certains produits chimiques, ou encore des gaz naturels de synthèse à brûler dans des turbines à gaz ou à combustion selon des technologies également connues et maîtrisées par les sociétés « bailleurs de licences de technologie » ou les compagnies d'ingénierie.

En référence à cette figure 1, par souci de clarté, notamment pour la bonne compréhension de la revendication 1, il convient de distinguer le gaz produit 20 dont une partie sera ensuite, après traitement tel que décrit plus loin dans le texte, recyclée vers l'enceinte de séchage 2, de ce que qui est décrit comme gaz de synthèse 12, qui est le gaz récupéré (et finalement "produit") en bout de la chaîne de traitement.

Dans la chaîne de traitement qui vient d'être décrite à l'aide du synoptique de la figure 1, tous les équipements mentionnés sont connus de l'homme de l'art et disponibles dans le commerce public. Par ailleurs, le contrôle de la valeur du rapport H₂/CO, choisi en fonction de l'application, est effectué par les moyens connus habituellement utilisés par l'homme de l'art. Notamment un dispositif de by-pass partiel (non représenté) du réacteur 9 permettra d'ajuster la teneur en CO à l'entrée du réacteur 9 et contribuera ainsi au réglage dudit rapport.

Les deux caractéristiques particulièrement avantageuses et originales de l'invention, qui peuvent être mises en oeuvre séparément mais dont le caractère inventif est renforcé par la combinaison, vont maintenant être décrites en relation avec la figure 1.

D'une part, l'invention prévoit qu'une partie du gaz chaud 20 produit dans la chaîne de traitement soit prélevée en aval du dispositif de gazéification 4, mais de préférence en 17, à la sortie du réacteur 9, pour prélever un gaz aussi sec que possible, bien que ce prélèvement puisse aussi être réalisé en 21, à l'entrée du réacteur 9. De préférence, la partie de gaz produit qui est recyclée vers l'enceinte de séchage représente entre 10 et 60% en volume du gaz circulant dans la chaîne de traitement au point de prélèvement 17 ou 21.

A cet effet, la chaîne de traitement comprend des moyens de prélèvement en 17 ou en 21 du gaz produit, et des moyens de relevage de pression 13 pour recycler la partie de gaz prélevée 14 vers l'enceinte de séchage 2.

Un pourcentage élevé de la part de gaz 20 qui peut être recyclé en amont, favorisant d'autant l'efficacité du séchage dans l'enceinte 2, est envisageable, comme on le verra plus avant dans la description, notamment par le fait que le gaz après séchage, est recyclé en aval dans la chaîne de traitement sans que ce recyclage génère par conséquent une quelconque déperdition du gaz de synthèse à produire.

Au point de prélèvement 17, la température du gaz prélevé 14 est comprise entre 200 et 400°C, de sorte qu'il apparaît utile de profiter de sa température pour le recycler vers l'enceinte de séchage 2 et rendre cette enceinte de chauffage quasiment autonome énergétiquement.

La pression du gaz prélevé 14 étant toutefois insuffisante compte tenu des traitements qu'il a déjà subis dans la chaîne de traitement, un compresseur 13 de conception classique permet de relever la pression du gaz chaud 15 de quelques bars, typiquement de 3 à 6 bars, à une pression suffisante pour son injection dans la chambre de séchage 2 où ce gaz chaud de séchage 15 participera efficacement au séchage de la charge biomasse humide 1.

Comme on le voit à la figure 2, la charge 1 est introduite dans l'enceinte de séchage 2 par au moins deux trémies de chargement 19a et 19b, procurant ainsi un système de sas pour réaliser l'étanchéité en pression de l'enceinte 2 vis-à-vis de l'atmosphère.

La trémie 19b est classiquement pressurisée grâce à une séquence automatique au moyen d'un gaz inerte (typiquement de l'azote ou du CO₂ récupéré dans la chaîne de traitement de l'invention) jusqu'à obtenir une pression dans cette trémie 19b supérieure à celle régnant dans l'enceinte de séchage 2, afin de permettre la vidange de la trémie 19b dans l'enceinte de séchage. Des moyens de séchage complémentaires 18 de type classique, par échangeur à serpentin à circulation de fluide caloporteur, peuvent être prévus sur la ligne d'arrivée du gaz déjà chaud de séchage 15 lorsque la charge de biomasse humide à sécher contient une quantité d'eau importante (par exemple supérieure à 40% poids d'eau par rapport au poids de matière sèche). Comme on le voit à la figure 3 qui sera décrite plus en détails ci-après, ces moyens de chauffage complémentaires 18a et 18b peuvent être installés à l'intérieur même de la chambre de séchage 2.

L'enceinte de séchage 2 peut être de conception simplifiée comprenant en outre une sortie pour la charge séchée 3 ainsi qu'une sortie pour le gaz humide 16 (après séchage). La demanderesse précisera plus loin l'intérêt de recycler ce gaz 16 en aval du dispositif de gazéification 4.

Dans un mode de réalisation particulier non illustré, la chambre de séchage 2 pourrait être conçue sous la forme d'un dispositif de torréfaction qui, dans des cas de charges spécifiques, est bien adapté au prétraitement de ce type de charges avant conversion thermochimique ultérieure. Par exemple, le brevet WO2007/078199 décrit un tel dispositif de torréfaction qui pourrait être intégré dans une chaîne de traitement de biomasse humide selon la présente invention.

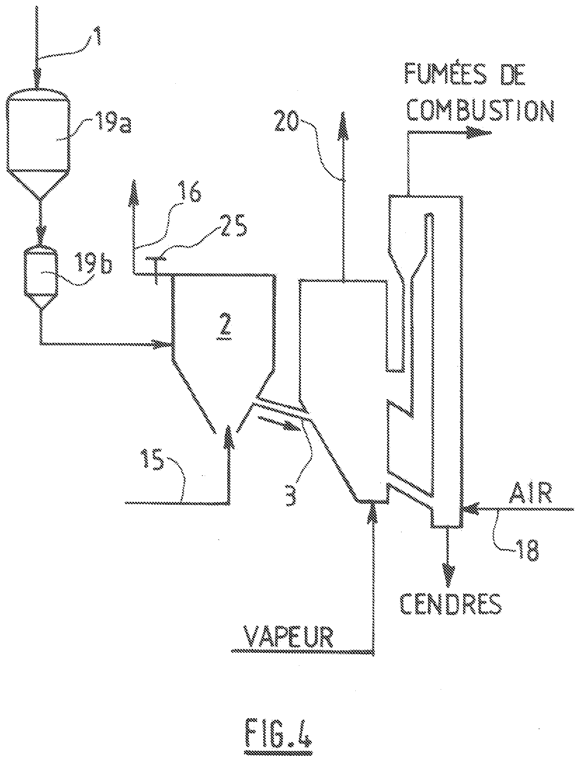

Les figures 3 et 4 décrivent schématiquement des modes de réalisation particuliers du dispositif de gazéification 4 et de son association avec l'enceinte de séchage 2.

A la figure 3, le dispositif de gazéification 4 est du type connu à lit bouillonnant ou lit fluidisé circulant. Par exemple, les compagnies suédoise TPS Termiska, américaine Foster Wheeler, allemande Lurgi, ou japonaise Nippon Steel, ont déjà développé ce type de dispositif, et sont capables d'en dimensionner ou d'en fournir des modes de réalisation adaptés pour la mise en oeuvre de l'invention.

L'une des particularités du mode de réalisation décrit à la figure 3, réside dans un séparateur 31 qui permet de filtrer le gaz de synthèse 20 produit par le dispositif de gazéification 4, et de récupérer en même temps les particules chaudes du cyclone du dispositif de gazéification 4. Lesdites particules chaudes sont alors réinjectées par une canne d'injection appropriée 18a (ou jambe de retour par gravité) dans l'enceinte de séchage 2 et participent ainsi, en même temps que les gaz chauds de séchage 15, et éventuellement un dispositif de séchage complémentaire optionnel 18b disposé à l'intérieur de l'enceinte de séchage 2, au séchage de la charge de biomasse humide 1.

A la figure 4, le dispositif de gazéification 4 est notamment du type connu sous le nom « Fast Internally Circulating Bed Gasifier » ou « FICB » qui a été développé par exemple par l'Université Technique de Vienne en Autriche et la société autrichienne AE Energietechnik. Un tel dispositif a été fabriqué et installé par la société Babcok Borsig Power à Guessing en Autriche. Pour la mise en oeuvre de la présente invention, on retiendra la particularité avantageuse de ce mode de réalisation du dispositif de gazéification 4 qui permet d'obtenir un gaz de synthèse 20 ayant un pouvoir calorifique très élevé, ce qui favorisera la capacité de séchage de la portion de ce gaz qui est recyclée vers l'enceinte de séchage 2 selon l'invention.

Pour plus de détails sur les principes de dimensionnement des dispositifs de gazéification pouvant être mis en oeuvre selon l'invention, on pourra utilement se référer au « Gasification book » (ISBN 0-7506-7707-4), par Christopher Higman et Maarten J. Van der Burgt, et publié par « Gulf Professional Publishing, an imprint of Elsevier, www.gulfpp.com ».

D'une manière générale, dans les différents exemples de réalisation décrits, la pression dans l'enceinte de séchage 2 sera à une pression très voisine de celle régnant dans le dispositif de gazéification 4, et, a priori, légèrement supérieure, de manière à permettre l'écoulement de la charge biomasse 1 alimentant le dispositif de gazéification 4 en toute sécurité. Pour cela, on prévoira une vanne 25 en sortie du gaz humide 16 pour réguler, suivant une consigne opératoire déterminée, la différence de pression entre l'enceinte 2 et le dispositif de gazéification 4, cette différence de pression étant typiquement comprise entre quelques mbars et quelques dizaines de mbars. La pression en aval de cette vanne 25 de régulation du gaz 16 est significativement plus basse, de l'ordre de 1 à 3 bars, que celle régnant dans l'enceinte de séchage 2. Ainsi, la vanne 25 en sortie du gaz 16 sera dimensionnée pour pouvoir évacuer dans sa plage de régulation le débit du gaz de séchage recyclé 16 pour ladite différence de pression.

Dans un système plus élaboré, pour satisfaire une grande plage de régulation et de débits suivant les contraintes de dimensionnement de l'enceinte de séchage, il serait aussi possible d'installer un système de double vanne à grand débit- petit débit selon les règles de l'homme de l'art.

Dans le cas particulièrement avantageux décrit plus loin où le gaz de séchage humide 16 est recyclé en aval dans la chaîne de traitement selon l'invention, la pression en aval de la vanne de régulation 25 du gaz 16 doit rester sensiblement supérieure à celle du point de réinjection en aval de ce gaz (soit, comme cela sera décrit plus loin, en amont du réacteur de conversion à la vapeur 9). Cette caractéristique de pression sera obtenue en spécifiant une différence de pression pour la vanne de régulation 25 du gaz 16 qui sera significativement inférieure à la perte de charge de la chaîne de traitement du gaz 20, entre la sortie du dispositif de gazéification 4 et le point de réinjection 23a ou 23b (en aval du reformeur de goudrons 5 ou de l'échangeur de chaleur 6). Cette perte de charge est typiquement de quelques bars et sera assurée par une vanne de régulation appropriée, s'ajoutant à la perte de charge des appareils ci-dessus mentionnés.

Dans le cas des dispositifs de gazéification décrits ci-dessus en référence à la figure 3, la circulation du matériau biomasse est permise entre le cyclone du dispositif de gazéification 4 et l'enceinte de séchage 2 par l'effet de la gravité : le cyclone du dispositif de gazéification 4 doit donc être situé à une hauteur suffisante pour vaincre la différence de pression légèrement négative qui existe entre la sortie du gaz 20 et l'enceinte de séchage 2.

L'autre caractéristique particulièrement avantageuse et originale de l'invention, comme on le voit à la figure 1, consiste dans le recyclage du gaz de séchage (16) chargé d'eau qui a transité dans l'enceinte de séchage 2, dans la chaîne de traitement du gaz de synthèse 20 en aval du dispositif de gazéification 4 pour suralimenter en eau le réacteur 9 de conversion du CO à la vapeur. Ainsi on profite de la présence de ce gaz 16 chargé d'eau pour prévoir un recyclage en aval qui permette au minimum de suralimenter ledit réacteur 9 de conversion du CO à la vapeur dont on rappelle qu'il a besoin d'une alimentation en eau 10 pour réaliser la réaction de « water gas shift » CO + H₂O = CO₂ + H₂ qui sert à l'ajustement du rapport H₂/CO dans le gaz de synthèse 20 à la sortie du réacteur 9. Cela permet évidemment des économies d'eau appréciables dans des régions où on en manque et où la présente invention peut être mise en oeuvre.

Selon un mode de réalisation particulier de l'invention, le gaz de séchage 16 qui a transité dans l'enceinte de séchage 2 et se trouve ainsi chargé d'eau, est recyclé dans la chaîne de traitement du gaz de synthèse 20, de préférence en 23b en amont de l'étape de dépoussiérage 7 ou éventuellement en 23a en amont de l'étape d'échange de chaleur 6. Le recyclage de ce gaz humide en ligne, dans la chaîne de traitement, participe ainsi à l'amélioration de la réaction de « Water Gas Shift » dans le réacteur 9 et de fait à l'amélioration du rendement global de la chaîne de conversion.

En d'autres termes, la présente invention, en combinant le recyclage du gaz de séchage pour un séchage intégré en ligne de la charge de matériau biologique humide, et celui du gaz humide en résultant, dans la chaîne de conversion thermochimique d'un matériau biologique humide, fournit aux exploitants industriels de ce type d'installation des moyens techniques rentables économiquement et écologiques, en limitant les émissions de CO₂ associées, en particulier lorsqu'il faut traiter des charges humides ou voire même très humides, tout en améliorant le rendement en gaz de synthèse produit.

## Revendications

1. Procédé de conversion thermochimique d'une charge humide, comprenant de 10 à 40% de poids d'eau par rapport au poids de matière sèche, ou très humide, comprenant plus de 40% en poids d'eau par rapport au poids de matière sèche, d'un matériau biologique tel que du charbon, de la biomasse ou des déchets organiques, en un gaz de synthèse ayant un rapport H₂/CO déterminé, dans une chaîne de traitement par gazéification qui comprend au moins une étape de gazéification de la charge et une étape de conversion du CO à la vapeur en aval de l'étape de gazéification, l'étape de conversion du CO à la vapeur étant réalisée dans un réacteur comprenant des moyens d'alimentation en eau, **caractérisé en ce qu'**il comprend, dans la chaîne de traitement, :
- préalablement à l'étape de gazéification, une étape de prétraitement de la charge, dans laquelle la charge est introduite dans une enceinte de séchage,
- une étape de traitement du gaz produit, comprenant par exemple un lavage, réalisée en aval de l'étape de gazéification et en amont de l'étape de conversion du CO à la vapeur,
**en ce que** ladite enceinte de séchage est alimentée par un gaz chaud de séchage, ce dernier étant constitué par une partie du gaz produit dans la chaîne de traitement prélevée en aval de ladite étape de traitement et en amont de l'étape de conversion du CO à la vapeur et recyclée par des moyens de relevage de pression vers l'enceinte de séchage, ledit gaz chaud de séchage étant introduit dans l'enceinte de séchage à une température comprise entre 200 et 400°C,
et **en ce que** le gaz de séchage chargé d'eau suite à son passage dans l'enceinte de séchage, est recyclé dans la chaîne de traitement en aval de l'étape de gazéification et en amont de l'étape de conversion du CO à la vapeur pour alimenter en eau, en tout ou partie, le réacteur de conversion du CO à la vapeur.

2. Procédé de conversion thermochimique selon la revendication 1, **caractérisé en ce que** ladite partie de gaz produit qui est recyclée vers l'enceinte de séchage, représente entre 10% et 60% en volume du gaz circulant dans la chaîne de traitement au point de prélèvement de ladite partie de gaz recyclée.

3. Procédé de conversion thermochimique selon l'une quelconque des revendications 1 ou 2, **caractérisé en ce que** la charge de matériau biologique a une teneur en eau supérieure ou égale à 10% par rapport au poids de matière sèche.

4. Procédé de conversion thermochimique selon l'une quelconque des revendications 1 à 3, **caractérisé en ce que**, en sortie de l'étape de prétraitement, le taux de déshydratation de la charge est compris entre 70 et 99% en poids, de préférence entre 90 et 95% en poids.

5. Procédé de conversion thermochimique selon l'une quelconque des revendications 1 à 4, dans lequel ladite étape de traitement comprend au moins une étape d'échange de chaleur et une étape de dépoussiérage, **caractérisé en ce que** le gaz de séchage, chargé d'eau suite à son passage dans l'enceinte de séchage, est recyclé dans la chaîne de traitement en amont de l'étape de dépoussiérage ou de l'étape d'échange de chaleur.

6. Chaîne de traitement par gazéification pour la conversion thermochimique d'une charge humide, comprenant de 10 à 40% de poids d'eau par rapport au poids de matière sèche, ou très humide (1), comprenant plus de 40% en poids d'eau par rapport au poids de matière sèche, d'un matériau biologique tel que du charbon, de la biomasse ou des déchets organiques, en un gaz de synthèse (12) ayant un rapport H₂/CO déterminé, ladite chaîne de traitement comprenant un dispositif de gazéification (4) de la charge et, en aval de ce dispositif de gazéification, un réacteur de conversion du CO à la vapeur (9) comprenant des moyens d'alimentation en eau (10), **caractérisée en ce qu'**elle comprend :
- de manière intégrée en ligne et en amont du dispositif de gazéification, une enceinte de séchage (2) de prétraitement de la charge humide préalablement à son introduction dans le dispositif de gazéification (4), cette enceinte de séchage étant pourvue d'une alimentation en gaz chaud de séchage (15) comprenant des moyens de prélèvement situés en aval de l'étape de gazéification pour prélever une partie du gaz (14) produit dans la chaîne de traitement, et des moyens de relevage de pression (13) pour recycler ladite partie de gaz prélevée (14) vers l'enceinte de séchage (2), ledit gaz chaud de séchage étant introduit dans l'enceinte de séchage à une température comprise entre 200 et 400°C,
- des moyens de recyclage dudit gaz de séchage (16), chargé d'eau suite à son passage dans l'enceinte de séchage (2), dans la chaîne de traitement en aval du dispositif de gazéification et en amont du réacteur de conversion du CO à la vapeur (9), pour alimenter, en tout ou partie, ce réacteur (9) en eau,
- un dispositif de traitement du gaz (30) situé en aval du dispositif de gazéification (4) et en amont du réacteur de conversion du CO à la vapeur (9),
les moyens de prélèvement du gaz chaud de séchage étant situés en aval dudit dispositif de traitement et en amont de l'étape de conversion du CO à la vapeur (9).

7. Chaîne de traitement selon la revendication 6, dans lequel le dispositif de traitement du gaz (30), comprend au moins un échangeur de chaleur (6) et un dispositif de dépoussiérage (7), **caractérisée en ce que** les moyens de recyclage (16) rejoignent la chaîne de traitement en amont du dispositif de dépoussiérage ou de l'échangeur de chaleur.

8. Chaîne de traitement selon l'une quelconque des revendications 6 ou 7, **caractérisée en ce que** les moyens de relevage de pression sont un compresseur.

9. Chaîne de traitement selon l'une quelconque des revendications 6 à 8, **caractérisée en ce que** l'enceinte de séchage (2) est du type à lit fluidisé et comprend des moyens complémentaires de chauffage (18) du gaz chaud de séchage (15).

10. Chaîne de traitement selon la revendication 9, **caractérisée en ce que** les moyens complémentaires de chauffage du gaz chaud de séchage sont disposés dans l'enceinte de séchage.

11. Chaîne de traitement selon l'une quelconque des revendications 6 à 10, **caractérisée en ce que** le dispositif de gazéification est du type à lit fluidisé bouillonnant ou circulant et comporte des moyens de recyclage (21) des particules chaudes du cyclone vers l'enceinte de séchage (2).

12. Chaîne de traitement selon l'une quelconque des revendications 6 à 11, **caractérisée en ce que** le dispositif de gazéification est du type à combustion allothermique.

13. Procédé de conversion selon l'une des revendications 1 à 5, **caractérisé en ce qu'**il est mis en oeuvre au moyen d'une chaîne de traitement selon l'une des revendications 6 à 12.

14. Procédé de conversion selon l'une des revendications 1 à 5 ou 13 **caractérisé en ce que** le gaz de synthèse produit est utilisé pour la fabrication de carburants liquides, un gaz naturel synthétique, de l'ammoniac synthétique, des alcools synthétiques ou de l'hydrogène synthétique, le rapport H₂/CO étant choisi de manière approprié.

## Patentansprüche

1. Verfahren zur thermochemischen Umwandlung eines feuchten Stroms, der 10 bis 40 % Gewicht an Wasser in Bezug auf das Gewicht der Trockenmasse umfasst, oder eines sehr feuchten Stroms, der mehr als 40 % Gewicht an Wasser in Bezug auf das Gewicht der Trockenmasse umfasst, an biologischem Material, wie etwa Kohle, Biomasse oder Bioabfall, in ein Synthesegas, das ein bestimmtes H₂/CO-Verhältnis aufweist, in einer Vergasungsbehandlungskette, die mindestens einen Vergasungsschritt des Stroms und einen CO-Umwandlungsschritt mit Dampf nach dem Vergasungsschritt umfasst, wobei der CO-Umwandlungsschritt mit Dampf in einem Reaktor erfolgt, der Wasserzuleitungsmittel umfasst, **dadurch gekennzeichnet, dass** es in der Behandlungskette Folgendes umfasst:
- vor dem Vergasungsschritt einen Vorbehandlungsschritt des Stroms, wobei der Strom in einen Trocknungsraum eingeleitet wird,
- einen Behandlungsschritt des erzeugten Gases, umfassend zum Beispiel eine Wäsche, der nach dem Vergasungsschritt und vor dem CO-Umwandlungsschritt mit Dampf erfolgt,
und dadurch, dass der Trocknungsraum von einem heißen Trocknungsgas gespeist wird, wobei Letzteres von einem Teil des in der Behandlungskette erzeugten Gases gebildet wird, der nach dem Behandlungsschritt und vor dem CO-Umwandlungsschritt mit Dampf entnommen und von Druckanhebungsmitteln in den Trocknungsraum rückgeführt wird, wobei das heiße Trocknungsgas in den Trocknungsraum mit einer Temperatur eingeleitet wird, die zwischen 200 und 400 °C beträgt,
und dadurch, dass das mit Wasser beladene Trocknungsgas nach seinem Durchlauf im Trocknungsraum in die Behandlungskette nach dem Vergasungsschritt und vor dem CO-Umwandlungsschritt mit Dampf rückgeführt wird, um den Reaktor zur CO-Umwandlung mit Dampf zur Gänze oder teilweise mit Wasser zu speisen.

2. Verfahren zur thermochemischen Umwandlung nach Anspruch 1, **dadurch gekennzeichnet, dass** der Teil des erzeugten Gases, der in den Trocknungsraum rückgeführt wird, zwischen 10 % und 60 % des Gasvolumens darstellt, das in der Behandlungskette an der Entnahmestelle des Teils des rückgeführten Gases zirkuliert.

3. Verfahren zur thermochemischen Umwandlung nach einem der Ansprüche 1 oder 2, **dadurch gekennzeichnet, dass** der Strom an biologischem Material einen Wasseranteil von 10 % oder mehr in Bezug auf das Gewicht der Trockenmasse aufweist.

4. Verfahren zur thermochemischen Umwandlung nach einem der Ansprüche 1 bis 3, **dadurch gekennzeichnet, dass** am Ausgang des Vorbehandlungsschritts der Entwässerungsgrad des Stroms zwischen 70 und 99 Gew.% beträgt, vorzugsweise zwischen 90 und 95 Gew.%.

5. Verfahren zur thermochemischen Umwandlung nach einem der Ansprüche 1 bis 4, wobei der Behandlungsschritt mindestens einen Wärmeaustauschschritt und einen Entstaubungsschritt umfasst, **dadurch gekennzeichnet, dass** das Trocknungsgas, das nach seinem Durchlauf im Trocknungsraum mit Wasser beladen ist, in die Behandlungskette vor dem Entstaubungsschritt oder dem Wärmeaustauschschritt rückgeführt wird.

6. Vergasungsbehandlungskette zur thermochemischen Umwandlung eines feuchten Stroms, der 10 bis 40 % Gewicht an Wasser in Bezug auf das Gewicht der Trockenmasse umfasst, oder eines sehr feuchten Stroms (1), der mehr als 40 % Gewicht an Wasser in Bezug auf das Gewicht der Trockenmasse umfasst, an biologischem Material, wie etwa Kohle, Biomasse oder Bioabfall, in ein Synthesegas (12), das ein bestimmtes H₂/CO-Verhältnis aufweist, wobei die Behandlungskette eine Vorrichtung zur Vergasung (4) des Stroms und nach dieser Vorrichtung zur Vergasung einen Reaktor zur CO-Umwandlung mit Dampf (9) umfasst, der Wasserzuleitungsmittel (10) umfasst, **dadurch gekennzeichnet, dass** sie Folgendes umfasst:
- einen in Reihe und vor der Vorrichtung zur Vergasung integrierten Trocknungsraum (2) zur Vorbehandlung des feuchten Stroms vor seiner Einleitung in die Vorrichtung zur Vergasung (4), wobei dieser Trocknungsraum mit einer Zuleitung von heißem Trocknungsgas (15) ausgestattet ist, die Entnahmemittel umfasst, die nach dem Vergasungsschritt angeordnet sind, um einen Teil des Gases (14) zu entnehmen, das in der Behandlungskette erzeugt wird, und Druckanhebungsmittel (13), um den Teil des entnommenen Gases (14) in den Trocknungsraum (2) rückzuführen, wobei das heiße Trocknungsgas in den Trocknungsraum mit einer Temperatur eingeleitet wird, die zwischen 200 und 400 °C beträgt,
- Mittel zur Rückführung des Trocknungsgases (16), das nach seinem Durchlauf im Trocknungsraum (2) mit Wasser beladen ist, in die Behandlungskette nach der Vorrichtung zur Vergasung und vor dem Reaktor zur CO-Umwandlung mit Dampf (9), um diesen Reaktor (9) zur Gänze oder teilweise mit Wasser zu speisen,
- eine Vorrichtung zur Behandlung des Gases (30), die nach der Vorrichtung zur Vergasung (4) und vor dem Reaktor zur CO-Umwandlung mit Dampf (9) angeordnet ist,
wobei die Mittel zur Entnahme des heißen Trocknungsgases nach der Vorrichtung zur Behandlung und vor dem CO-Umwandlungsschritt mit Dampf (9) angeordnet sind.

7. Behandlungskette nach Anspruch 6, wobei die Vorrichtung zur Behandlung des Gases (30) mindestens einen Wärmetauscher (6) und eine Entstaubungsvorrichtung (7) umfasst, **dadurch gekennzeichnet, dass** sich die Mittel zur Rückführung (16) vor der Entstaubungsvorrichtung oder dem Wärmetauscher der Behandlungskette anschließen.

8. Behandlungskette nach einem der Ansprüche 6 oder 7, **dadurch gekennzeichnet, dass** die Druckanhebungsmittel ein Verdichter sind.

9. Behandlungskette nach einem der Ansprüche 6 bis 8, **dadurch gekennzeichnet, dass** der Trocknungsraum (2) von der Art mit Wirbelschicht ist und zusätzliche Mittel zum Erhitzen (18) des heißen Trocknungsgases (15) umfasst.

10. Behandlungskette nach Anspruch 9, **dadurch gekennzeichnet, dass** die zusätzlichen Mittel zum Erhitzen des heißen Trocknungsgases im Trocknungsraum angeordnet sind.

11. Behandlungskette nach einem der Ansprüche 6 bis 10, **dadurch gekennzeichnet, dass** die Vorrichtung zur Vergasung von der Art mit sprudelnder oder zirkulierender Wirbelschicht ist und Mittel zur Rückführung (21) heißer Partikel des Zyklons in den Trocknungsraum (2) umfasst.

12. Behandlungskette nach einem der Ansprüche 6 bis 11, **dadurch gekennzeichnet, dass** die Vorrichtung zur Vergasung von der Art mit allothermer Verbrennung ist.

13. Verfahren zur Umwandlung nach einem der Ansprüche 1 bis 5, **dadurch gekennzeichnet, dass** es mittels einer Behandlungskette nach einem der Ansprüche 6 bis 12 umgesetzt wird.

14. Verfahren zur Umwandlung nach einem der Ansprüche 1 bis 5 oder 13, **dadurch gekennzeichnet, dass** das erzeugte Synthesegas für die Herstellung von Flüssigbrennstoffen, einem synthetischen Erdgas, synthetischem Ammoniak, synthetischen Alkoholen oder synthetischem Wasserstoff verwendet wird, wobei das H₂/CO-Verhältnis entsprechend gewählt wird.

## Claims

1. A process for the thermochemical conversion of a wet feed, comprising 10 to 40% water by weight relative to the weight of dry matter, or a very wet feed, comprising more than 40% water by weight relative to the weight of dry matter, of a biological material, such as coal, biomass or organic waste, into a synthesis gas having a defined H₂/CO ratio, in a gasification treatment line that includes at least a step of gasifying the feed and a water-gas shift step downstream the gasification step, the water-gas shift step being carried out in a reactor that includes water supply means, **characterized in that** it includes, in the treatment line, :
- prior to the gasification step, a step of pretreating the feed, in which the feed is introduced into a drying chamber,
- a step of treating the gas produced, comprising for example a scrubbing operation, carried out downstream of the gasification step and upstream of the water-gas shift step,
and **in that** said drying chamber is supplied with a hot drying gas, the latter being formed by a portion of the gas produced in the treatment line, which is withdrawn downstream of said treatment step and upstream the water-gas shift step and recycled by pressurizing means into the drying chamber, said hot drying gas being introduced into the drying chamber at a temperature between 200 and 400°C,
and **in that** the drying gas laden with water after passing through the drying chamber is recycled into the treatment line downstream of the gasification step and upstream of the water-gas shift step in order for the water-gas shift reactor to be completely or partly supplied with water.

2. The thermochemical conversion process as claimed in claim 1, **characterized in that** said portion of gas produced, which is recycled into the drying chamber, represents between 10% and 60% by volume of the gas flowing through the treatment line at the point of withdrawal of said recycled portion of gas.

3. The thermochemical conversion process as claimed in any one of claims 1 or 2, **characterized in that** the feed of biological material has a water content equal to or greater than 10% relative to the weight of dry matter.

4. The thermochemical conversion process as claimed in any one of claims 1 to 3, **characterized in that** the degree of dehydration of the feed after the pretreatment step is between 70 and 99% by weight, preferably between 90 and 95% by weight.

5. The thermochemical conversion process as claimed in any one of claims 1 to 4, in which said treatment step comprises at least a heat exchange step and a dust removal step, **characterized in that** the drying gas, laden with water after passing through the drying chamber, is recycled into the treatment line upstream of the dust removal step or of the heat exchange step.

6. A gasification treatment line for the thermochemical conversion of a wet feed, comprising 10 to 40% water by weight relative to the weight of dry matter, or a very wet feed (1), comprising more than 40% water by weight relative to the weight of dry matter, of a biological material such as coal, biomass or organic waste, into a synthesis gas (12) having a defined H₂/CO ratio, said treatment line comprising a gasification device (4) for gasifying the feed, and, downstream of this gasification device, a water-gas shift reactor (9) that includes water supply means (10), **characterized in that** it includes:
- so as to be integrated in line and upstream of the gasification device, a drying chamber (2) for pretreating the wet feed prior to its introduction into the gasification device (4), and this drying chamber being provided with a hot drying gas supply (15) that includes withdrawal means located downstream of the gasification step for withdrawing a portion of the gas (14) produced in the treatment line, and pressurizing means (13) for recycling said withdrawn portion of gas (14) into the drying chamber (2), said hot drying gas being introduced into the drying chamber at a temperature between 200 and 400°C,
- recycling means (16), for recycling said drying gas laden with water after passing through the drying chamber (2) into the treatment line downstream of the gasification device and upstream of the water-gas shift reactor (9), in order for this reactor (9) to be completely or partly supplied with water,
- a gas treatment device (30) located downstream of the gasification device (4) and upstream of the water-gas shift reactor (9), the withdrawal means being located downstream of said treatment device and upstream of the water-gas shift step (9).

7. The treatment line as claimed in claim 6, in which the gas treatment device (30) comprises at least a heat exchanger (6) and a dust removal device (7), **characterized in that** the recycling means (16) rejoin the treatment line upstream of the dust removal device or of the heat exchanger.

8. The treatment line as claimed in any one of claims 6 and 7, **characterized in that** the pressurizing means are a compressor.

9. The treatment line as claimed in any one of claims 6 to 8, **characterized in that** the drying chamber (2) is of the fluidized bed type and includes supplementary means (18) for heating the hot drying gas (15).

10. The treatment line as claimed in claim 9, **characterized in that** the supplementary means for heating the hot drying gas are placed in the drying chamber.

11. The treatment line as claimed in any one of claims 6 to 10, **characterized in that** the gasification device is of the bubbling fluidized bed or circulating fluidized bed type and includes means (21) for recycling the hot particles from the cyclone into the drying chamber (2).

12. The treatment line as claimed in any one of claims 6 to 11, **characterized in that** the gasification device is of the allothermic combustion type.

13. The conversion process as claimed in one of claims 1 to 5, **characterized in that** it is implemented by means of a treatment line as claimed in one of claims 6 to 12.

14. The conversion process as claimed in one of claims 1 to 5 and 13, **characterized in that** the synthesis gas produced is used for the manufacture of liquid fuels, a synthetic natural gas, synthetic ammonia, synthetic alcohols or synthetic hydrogen, the H₂/HC ratio being appropriately chosen.
